# EUROPEAN PATENT SPECIFICATION

(11) **EP 1 480 393 B1**
(45) Date of publication and mention of the grant of the patent: **26.04.2017**
(21) Application number: 03011564.6
(22) Date of filing: 21.05.2003
(51) Int. Cl.: H04L 29/06, H04L 29/08, H04W 4/02, G01S 5/00

(54) **Communication system providing information on location dependent and/or situation aware services**
Kommunikationssystem zur Bereitstellung von ortsabhängigen Informationen und/oder situationsbewusste Dienste
Système de communication fournissant des informations dépendant de la localisation et/ou tenue à jour de la position

(43) Date of publication of application: 24.11.2004
(73) Proprietor: Sony Mobile Communications Inc., Shinagawa-ku Tokyo 140-0002 (JP)
(72) Inventor: Maletz, Thomas, Sony Ericsson Mobile Com. Int. AB, 85609 Aschheim-Dornach (DE)
(74) Representative: Banzer, Hans-Jörg

(56) References cited:
- DE-A- 10 116 972
- GB-A- 2 374 254
- US-A1- 2001 048 746
- US-A1- 2002 132 614
- US-B1- 6 169 497

## Description

The present invention relates to a communication system which comprises a communication device serving as an information platform - the so-called information beacon - which emits wireless information data on location dependent and/or situation aware services. The invention relates further to a mobile communication device serving as an information beacon.

Wireless data transfer is today widely used for telephone conversation and the exchange of data between electrical devices, such as notebooks, printers, PDAs or the like. Recently, new communication systems have been developed which use the possibilities of wireless data communication for providing information on location dependent and/or situation aware services. An example of such a new communication system is the so-called "Heywow"-project which has been developed by the DLR (Deutsches Zentrum für Luft- und Raumfahrt - German Aerospace Center) together with its partners. This Heywow-project is an architecture which combines technologies from communication and navigation and shall be briefly explained in the following.

The Heywow-architecture is set up as a platform containing software and hardware components which allow a flexible integration of different services or data. A user can access these services via a small communication end-device, e.g. a PDA, a notebook or a mobile phone, which is able to communicate wirelessly with a local service access point, the so-called information beacon.

The information beacon emits via a wireless communication link (e.g. Bluetooth, GSM, GPRS, UMTS or WLAN) information data providing information on the location of the beacon and services offered by the provider of the beacon. For example, the provider of an information beacon could be a store - e.g. a pharmacy - which informs the users of the communication system on the location of the store and its opening hours. Further, the data transmitted by the beacon could also provide information on the latest offers of the store. In order to give a user of the system detailed information how to find the store, the data transmitted by the beacon could be supplemented by navigation information obtained by a navigation system like GPS. If the actual location of the user is also known, the system can inform the user on the shortest way to the location of the beacon (e.g. "*200 m ahead, 50 m to the left*").

All those services provided by the information beacons via the wireless information data can be uniformly accessed by the users of communication end-devices which are located in the transmission area of the information beacon. This means, a user of a communication end-device is automatically informed by an information beacon as soon as he enters the broadcast area of this beacon.

There are different classes of information beacons depending on the services offered. For example, information beacons of a simple category can only send wireless information data in order to inform the users of the information system on the location or the services offered by the provider of the beacon. More complex information beacons however are also able to exchange data with the user of a communication end-device in order to provide more detailed information upon a request transmitted by the user. In a further stage, it is also possible that the beacon connects to another information network (e.g., to the Internet) in order to obtain additional information which is afterwards transferred to the user. The connection to the Internet can also be used to implement additional services like E-commerce or the like.

In US 2001/0048746 A1, a method of estimating the location of a device is disclosed. According to this method, the location of a first device can be determined by determining the location of a separately housed second device located near to the first device and providing the location of the second device to the first device. For this purpose, a wireless communications link between the first device and the second device can be used.

In US 2002/0132614 A1, an arrangement with a beacon for providing an information service is disclosed. The beacon is capable of establishing a short range communication link with a mobile device for performing the service. Further, the beacon can receive data to be used in the information service over a long range communication link.

In DE 10116972 A1, a data transmission system for wireless connection of two devices is disclosed. The devices are stationary and comprise Bluetooth transceivers. By using directional antennas, the connection range can be extended.

In GB 2374254 A, techniques for providing location information to a mobile phone are described. These techniques are based on using wireless communication modules which use short distance communication for transmitting positional information to the mobile phones. The mobile phones can receive the positional information using the short-distance wireless communication, and also report the received positional information to another mobile phone using an already existing short message service or e-mail service.

Up to now, information beacons of all categories have been realised as stationary devices which are relatively expensive. It is therefore an object of the present invention to provide a new type of an information beacon for a communication system as described above which is less expensive and can be used in various applications.

The present invention provides a communication system according to claim 1. The dependent claims define further embodiments of the invention.

In accordance with the present invention, a communication system comprising a first communication device serving as an information beacon and at least one second communication device which is able to receive the communication data emitted by the information beacon is provided wherein the first communication device is a mobile communication device. Preferably, the communication device representing the information beacon is a portable telephone.

The idea underlying the present invention is thus to use a mobile communication device as an information beacon. This solution offers a simple and cost-saving way to obtain an information beacon since mobile communication devices of the present generation already contain most of the elements and features which are necessary to act as an information beacon.

Since a mobile telephone is already adapted to transmit wireless data, it readily can be used to transmit wireless information data within a certain area in order to inform users of the communication system on the location and services offered by the owner of the mobile telephone. Preferably, the information data are transmitted according to the so-called Bluetooth standard which has been primarily designed for replacing cables between electronic devices such as computers, printers, digital cameras etc. One advantage of this Bluetooth standard is that two communication devices can automatically connect to each other and use this communication link to carry information back and forward without the need of a cellular communication network such as a GSM network. Thus, a mobile communication device having communication means for establishing a Bluetooth link is particular suitable to act as an information beacon. Nevertheless, the mobile communication device of the present invention could also use other communication links to emit the wireless information data, e.g. GSM, GPRS, UMTS or WLAN.

If the communication device used as the information beacon comprises in addition to the Bluetooth communication means further communication means for establishing
a second communication link, this additional communication means could be used to contact another information network (e.g. the Internet) in order to obtain additional information which is afterwards forwarded to the user which is in contact with the information beacon. This second communication link could also be used by the provider of the information beacon in order to update the information data to be emitted by the communication device or to realise an access point for the information network which can be used be the users the communication system.

Another advantage of using a mobile communication device as an information beacon is that also mobile services can use this information beacon. For example, a taxi driver could inform potential clients on the actual location of his taxi. Since the data emitted by the beacon can be mainly received within a certain distance from the beacon (if the information is e.g. emitted via Bluetooth), only users in the proximity of the taxi, i.e., only these users which might be really interested to order this taxi, will be informed.

The present invention also relates to a mobile communication device which comprises first communication means for emitting wireless communication data and which is adapted to serve as an information beacon in a communication system as described above. In particular, the mobile communication device could be a portable telephone.

The adaptations of the communication device can include an external connection line which is used to connect the portable telephone to an external power supply. Further, the antenna (preferably a Bluetooth antenna) used to emit the information data could be adapted to radiate the wireless communication data only in a preferred area. This adaptation is to optimise the broadcast area of the information beacon by concentrating the radiation into a certain direction. The communication device can further comprise navigation means for determining its actual location. In particular, the communication device can comprise a GPS receiver.

Further advantages, features and details of the present invention will become apparent from the following description of preferred embodiments with reference to the drawings.
Fig. 1 is a schematic view of a communication system using information beacons to provide location dependent and situation aware services.
Fig. 2a shows an embodiment of a mobile communication device which is used as an information beacon in the communication system shown in Fig. 1.
Fig. 2b shows a schematic view of the components contained in the communication device shown in Fig. 2a.

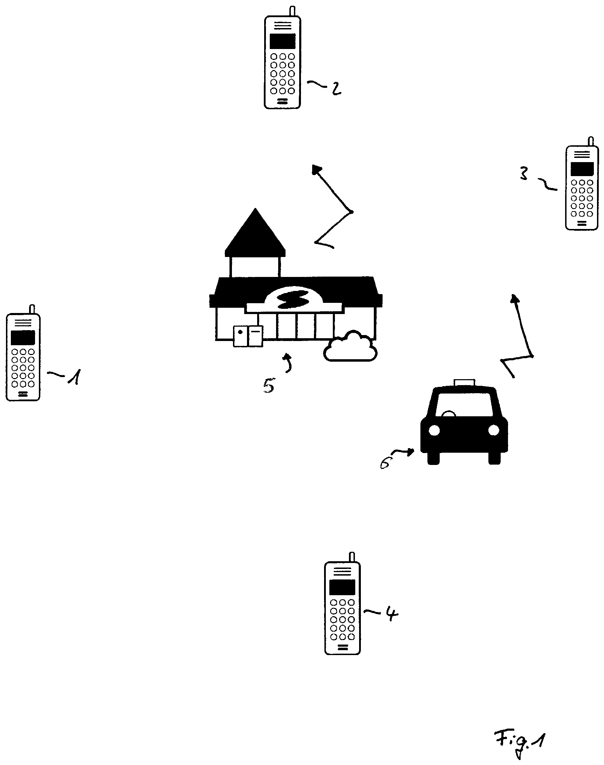

With reference to Fig. 1, the communication system of the present invention will be explained first.

The communication system shown in Fig. 1 comprises two different classes of participants. The first class is represented by the information beacons which emit information data for the users of the communication system. These users which are represented by four portable phones 1 to 4 define the second class of participants. In the example shown in Fig. 1, a first information beacon is located in a local shop 5 (e.g. a grocery store) and a mobile second information beacon is located in a taxi 6.

The two providers of the information beacons, i.e. the grocery store 5 and the taxi 6 transmit wireless information data which can be received by the users 1 to 4 provided they reside in the broadcast area of the two information beacons or are otherwise able to contact the beacons (this second option will be explained later). The data provided by the grocery store 5 inform e.g. on the latest offers or discounts of the store and/or on its opening hours. The data emitted by the taxi 6 inform primarily on its actual location which allows a user to locate the nearest taxi. In order to be able to inform the users 1 to 4 on the location of the taxi 6, the information beacon used therein must be able to locate its actual position. This could be realised by providing the information beacon with an additional GPS receiver.

According to a preferred embodiment of the present invention, the information beacons emit their information data only within a certain area around the location of the beacon. E.g., the data emitted by the taxi 6 can only be received within an area of approximately 300 metres around the actual location of the taxi 6. Therefore, the users of the communication system are only informed on services by information beacons in their closer proximity.

If one of the four users 1 to 4 receives the information data emitted by the information beacons of the two providers 5 and 6, the corresponding information is immediately displayed on the screen of the portable telephone. In this way, the user is automatically informed on location dependent and/or situation aware services of a beacon provider whose information data are received by the end-device of the user.

It is important to notice that Fig. 1 shows only one possible scenario of an communication system in accordance with the present invention. As will be readily understood, a plurality of other institutions which offer public services might provide wireless information by using an information beacon of the present invention. Potential providers are e.g. hotels, restaurants, cinemas and the like.

Another example of using an information beacon of the present invention is to use it as a mailbox or a BBS (Bulletin Board System). In this application, the users of the communications system are allowed to leave messages (e.g. "car for sale") on the beacon which can be read by other users. Such a BBS could also be used to exchange music e.g. in form of MP3-files or other information.

Further, the beacon could also be used to serve as an access point for accessing e.g. the Internet or another information network. A user of the communication system can transmit via the wireless communication link data (e.g. an email message, a request or a picture) to the beacon which data are forwarded from the beacon the Internet.

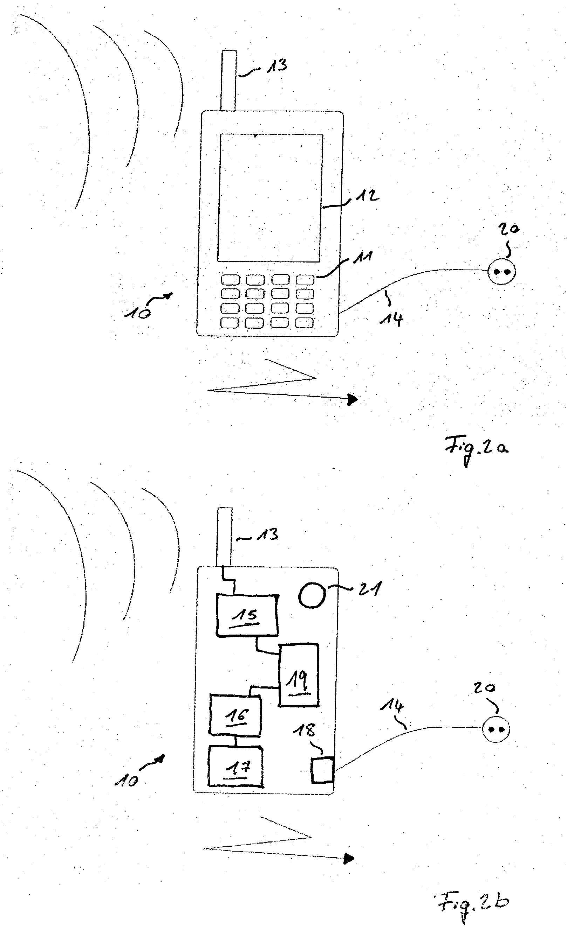

According to the present invention, portable communication devices are used to serve as information beacons. As shown in Fig. 2a, a portable telephone 10 which is slightly adapted could be used for this function.

The portable telephone 10 comprises first an alphanumeric key pad 11, a display 12 and an antenna 13 in order to establish wireless communication links like GSM, GPRS or UMTS links. The telephone 10 further comprises means for emitting the information data used in the communication system of Fig. 1. In the preferred embodiment of Fig. 2a and 2b, these means are represented by Bluetooth communication means 16 and a Bluetooth antenna 17 which emits the information data in accordance with the Bluetooth standard.

Since the energy required for serving as an information beacon is considerably higher the energy required for the normal telephone function, the telephone shown in Fig. 2a can be connected to an external power supply 20 which allows the telephone 10 to act permanently as an information beacon.

Fig. 2b shows the electrical components of the portable telephone 10. These include at first the communication means 16 for a Bluetooth communication which communication means 16 are connected to the Bluetooth antenna 17. Further, second communication means 15 are provided which are connected to the GSM antenna 13 for the usual GSM communication. As can be further gathered from Fig. 2b, the telephone 10 includes also a connector 18 for the connection cable 14 which is used to connect the telephone 10 to the external power supply 20. The communication means 15 for the GSM communication and the communication means 16 for the Bluetooth communication are controlled by controlling means 19. The telephone 10 also comprises a GPS receiver 21 which is used to determine the actual location of the information beacon. The data obtained by the GPS receiver 21 can be used to provide additional navigation information to the users of the communication system.

As mentioned above, Bluetooth communication is preferred for transmitting the information data to the users of the communication system. Therefore, while the telephone 10 is used as an information beacon, primarily the communication means 16 for the Bluetooth communication are active. However, at the same time with the Bluetooth communication the communication means 15 for the GSM communication could be used to connect the phone 10 to the Internet in order to obtain further information which is forwarded to a user upon its request.

E.g., if a user of the communication system contacts the information beacon of the grocery store 5 and asks for further information regarding the latest offers, the information beacon of the grocery store 5 could obtain more information on the offered products via the Internet and transmit these information afterwards to the user. Further, the communication system could be used for E-commerce services wherein the GSM link of the telephone 10 is used to contact a financial institution in order to authorise a financial transaction. Thus, a portable telephone 10 is preferably used as an information beacon which allows both Bluetooth and GSM communication. Of course, alternatively to the GSM communication means other communication means for establishing a GPRS, a UMTS or a WLAN link could be provided.

The Bluetooth antenna 17 could be adapted to emit the information data only within a certain area or direction. In this way, the broadcast area of the information beacon is optimised since the radiation is concentrated into a preferred direction.

In addition or alternatively to allowing only a data exchange between the information beacon and the users via the Bluetooth link, also the communication means for establishing a GSM, GPRS, UMTS or WLAN link could be used for contacting the users of the communication system, i.e., to emit the wireless information data. Further, it could be implemented that this communication means are used to allow users of the communication system to contact the information beacon from home via a normal GSM, GPRS or UMTS call. This application is of particular use if the information beacon is used as a BBS since the users of the BBS would be allowed to post their offers and / or information via a greater distance instead of contacting it only locally via the Bluetooth link. Further, in the example of the communication system shown in fig. 1 a user could contact the information beacon of the grocery store 5 from home via GSM in order to check whether the store is actually opened or closed.

The first or second communication means could be also use to wirelessly modify the information beacon. The provider of the beacon could log into the beacon via Bluetooth, GSM, GPRS, UMTS, Internet etc.. to control the beacon or to update or change the information emitted by the beacon. Such a remote control of the beacon is of particular use if the beacon is fixed at an inaccessible location, e.g. the ceiling of a shop or the like. In this case, the potable telephone could be further adapted by removing or omitting the keyboard and or the display since these elements are not used by the provider of the beacon.

The present invention thus offers a very handy way to form an information beacon in a communication system. Mobile telephones which are already available have to be only slightly adapted in order to be able to act as an information beacon. Further, the information beacons according to the present invention can also be used by mobile services which opens new possibilities for the use of the communication system.

## Claims

1. Communication system comprising
- a first communication device (10) serving as an information beacon which emits wireless information data providing information on location dependent and/or situation aware services, and
- at least one second communication device (1, 2, 3, 4) adapted to receive the information data emitted by the first communication device (10),
wherein said first communication device (10) comprises
a) first communication means (16, 17) for emitting said wireless information data via a first communication link and
b) second communication means (13, 15) for exchanging data with an information network via a second communication link,
**characterized in**
**that** the second communication link is a Wireless Local Area Network communication link and is different from the first communication link,
**that** the first communication device (10) is a mobile communication device and adapted to be contacted by the at least one second communication device (1, 2, 3, 4) via the second communication link, and
**that** the first communication device (10) is adapted to receive communication data emitted by the second communication device (1, 2, 3, 4) in order to contact the first communication device (10).

2. Communication system according to claim 1,
wherein, via the first communication link, the information data are emitted within a certain area around the location of the first communication device (10).

3. Communication system according to claim 2,
wherein the information data are emitted within a preferred direction.

4. Communication system according to any one of the preceding claims, wherein the second communication link between the first communication device (10) and the information network is used for updating and/or changing the information data to be emitted by the first communication device (10).

5. Communication system according to claim 4,
wherein the communication link between the first communication device (10) and the information network is used to forward data received by the first communication device (10) from the second communication device (1, 2, 3, 4) to the information network.

6. Communication system according to claim 4 or 5,
wherein the information network is the Internet.

7. Communication system according to any one of the preceding claims, wherein the first communication means (16, 17) are adapted to establish a Bluetooth communication link.

8. Communication system according to any one of the preceding claims, wherein the information data transmitted by the information beacon are supplemented by navigation information.

## Patentansprüche

1. Kommunikationssystem umfassend
- eine erste Kommunikationsvorrichtung (10), welche als Informationsindikator dient, welcher drahtlose Informationsdaten emittiert, welche Information über ortsabhängige und/oder situationsabhängige Dienste bereitstellen, und
- mindestens eine zweite Kommunikationsvorrichtung (1, 2, 3, 4), welche ausgestaltet ist, um die Informationsdaten zu empfangen, welche von der ersten Kommunikationsvorrichtung (10) emittiert werden,
wobei die erste Kommunikationsvorrichtung (10) umfasst:
a) erste Kommunikationsmittel (16, 17), um die drahtlosen Informationsdaten über eine erste Kommunikationsverbindung zu emittieren, und
b) zweite Kommunikationsmittel (13,15), um Daten mit einem Informationsnetzwerk über eine zweite Kommunikationsverbindung auszutauschen,
**dadurch gekennzeichnet,**
**dass** die zweite Kommunikationsverbindung eine Kommunikationsverbindung eines drahtlosen lokalen Netzwerks ist und sich von der ersten Kommunikationsverbindung unterscheidet,
**dass** die erste Kommunikationsvorrichtung (10) eine mobile Kommunikationsvorrichtung ist und ausgestaltet ist, um durch die mindestens eine zweite Kommunikationsvorrichtung (1, 2, 3, 4) über die zweite Kommunikationsverbindung kontaktiert zu werden, und
**dass** die erste Kommunikationsvorrichtung (10) ausgestaltet ist, um Kommunikationsdaten zu empfangen, welche durch die zweite Kommunikationsvorrichtung (1, 2, 3, 4) emittiert werden, um die erste Kommunikationsvorrichtung (10) zu kontaktieren.

2. Kommunikationssystem nach Anspruch 1,
wobei über die erste Kommunikationsverbindung die Informationsdaten in einem bestimmten Bereich um den Ort der ersten Kommunikationsvorrichtung (10) herum emittiert werden.

3. Kommunikationssystem nach Anspruch 2,
wobei die Informationsdaten in eine bevorzugte Richtung emittiert werden.

4. Kommunikationssystem nach einem der vorhergehenden Ansprüche, wobei die zweite Kommunikationsverbindung zwischen der ersten Kommunikationsvorrichtung (10) und dem Informationsnetzwerk eingesetzt wird, um die Informationsdaten, welche durch die erste Kommunikationsvorrichtung (10) zu emittieren sind, zu aktualisieren und/oder zu ändern.

5. Kommunikationssystem nach Anspruch 4,
wobei die Kommunikationsverbindung zwischen der ersten Kommunikationsvorrichtung (10) und dem Informationsnetzwerk eingesetzt wird, um Daten, welche durch die erste Kommunikationsvorrichtung (10) von der zweiten Kommunikationsvorrichtung (1, 2, 3, 4) empfangen werden, an das Informationsnetzwerk weiterzuleiten.

6. Kommunikationssystem nach Anspruch 4 oder 5,
wobei das Informationsnetzwerk das Internet ist.

7. Kommunikationssystem nach einem der vorhergehenden Ansprüche,
wobei die ersten Kommunikationsmittel (16, 17) ausgestaltet sind, um eine Bluetooth-Kommunikationsverbindung aufzubauen.

8. Kommunikationssystem nach einem der vorhergehenden Ansprüche,
wobei die Informationsdaten, welche durch den Informationsindikator übertragen werden, durch Navigationsinformation ergänzt werden.

## Revendications

1. Système de communication comprenant :
- un premier dispositif de communication (10) servant de balise d'information qui émet des données d'information sans fil fournissant des informations sur des services dépendant de la position et/ou tenant compte de la situation ; et
- au moins un second dispositif de communication (1, 2, 3, 4) conçu pour recevoir les données d'information émises par le premier dispositif de communication (10) ;
dans lequel ledit premier dispositif de communication (10) comprend :
a) un premier moyen de communication (16, 17) destiné à émettre lesdites données d'information sans fil sur une première liaison de communication ; et
b) un second moyen de communication (13, 15) destiné à échanger des données avec un réseau d'information, sur une seconde liaison de communication ;
**caractérisé en ce que** :
la seconde liaison de communication est une liaison de communication de réseau local sans fil et est différente de la première liaison de communication ;
le premier dispositif de communication (10) est un dispositif de communication mobile et est conçu pour être contacté par ledit au moins un second dispositif de communication (1, 2, 3, 4) sur la seconde liaison de communication ; et
le premier dispositif de communication (10) est conçu pour recevoir des données de communication émises par le second dispositif de communication (1, 2, 3, 4) afin de contacter le premier dispositif de communication (10).

2. Système de communication selon la revendication 1, dans lequel, sur la première liaison de communication, les données d'information sont émises sur une certaine zone autour de la position du premier dispositif de communication (10).

3. Système de communication selon la revendication 2, dans lequel les données d'information sont émises dans une direction préférentielle.

4. Système de communication selon l'une quelconque des revendications précédentes, dans lequel la seconde liaison de communication entre le premier dispositif de communication (10) et le réseau d'information est utilisée pour mettre à jour et/ou modifier les données d'information à émettre par le premier dispositif de communication (10).

5. Système de communication selon la revendication 4, dans lequel la liaison de communication entre le premier dispositif de communication (10) et le réseau d'information est utilisée pour acheminer vers le réseau d'information des données reçues par le premier dispositif de communication (10) en provenance du second dispositif de communication (1, 2, 3, 4).

6. Système de communication selon la revendication 4 ou 5, dans lequel le réseau d'information est l'internet.

7. Système de communication selon l'une quelconque des revendications précédentes, dans lequel le premier moyen de communication (16, 17) est conçu pour établir une liaison de communication Bluetooth.

8. Système de communication selon l'une quelconque des revendications précédentes, dans lequel les données d'information émises par la balise d'information sont complétées par des informations de navigation.
